# EUROPÄISCHE PATENTSCHRIFT

(11) **EP 1 030 620 B1**
(45) Veröffentlichungstag und Bekanntmachung des Hinweises auf die Patenterteilung: **17.09.2003**
(21) Anmeldenummer: 98963435.7
(22) Anmeldetag: 10.11.1998
(51) Int. Cl.: A61C 3/02, A61C 8/00

(54) **DENTALINSTRUMENT**
DENTAL INSTRUMENT
INSTRUMENT DENTAIRE

(30) Priorität: 10.11.1997 DE 19749597
(43) Veröffentlichungstag der Anmeldung: 30.08.2000
(73) Patentinhaber: Gebr. Brasseler GmbH & Co. KG, D-32657 Lemgo (DE)
(72) Erfinder: HARTMANN, Hans-Jürgen, D-82327 Tutzing (DE); DANGER, Karl-Heinz, D-32758 Detmold (DE)
(74) Vertreter: Weber, Joachim, Dr.
(86) Internationale Anmeldenummer: EP9807173
(87) Internationale Veröffentlichungsnummer: WO99023969

(56) Entgegenhaltungen:
- DE-U- 29 515 661
- US-A- 4 526 542
- US-A- 5 569 035

## Beschreibung

Die Erfindung bezieht sich auf ein Dentalinstrument mit einem um seine Längsachse drehbaren Schaft, welcher lösbar mit einer Antriebseinrichtung verbindbar ist sowie mit einem mit dem Schaft verbundenen, mit zumindest einer Schneide versehenen Werkzeugteil, und mit einem zwischen dem Schaft und dem Werkzeugteil angeordneten, im wesentlichen ringwulstartigen Anschlag.

Dentalinstrumente der beschriebenen Art sind aus dem Stand der Technik in unterschiedlichsten Ausgestaltungsformen vorbekannt. Insbesondere bei der zahnärztlichen Implantologie wird mit derartigen rotierenden Dentalinstrumenten eine Knochenkavität geschaffen, in welche dann ein Implantat eingesetzt oder eingeschraubt wird.

Diese Dentalinstrumente können in Form von Bohrern, Fräsern oder in ähnlicher Weise ausgebildet sein. Sie weisen jeweils Schneiden auf, mit welchen spanend der Knochen des Patienten bearbeitet wird.

Durch die Drehbewegung des Instruments und durch die zum Zerspanen des Knochen-Materials benötigte Energie wird von dem Instrument auch Wärme freigesetzt, welche auf das benachbarte Knochen-Material übertragen wird. Um eine atraumatische Behandlung eines Patienten sicherzustellen und um insbesondere unerwünschte thermische Einwirkungen zu vermeiden, ist es wünschenswert, die bei der Bearbeitung auftretenden Temperaturen niedrig zu halten. Insbesondere bei Temperaturen oberhalb 42°C können Schädigungen der umgebenden Knochenstruktur auftreten, weiterhin kann die Heilung des Implantates beeinträchtigt werden.

Es wurde deshalb vorgeschlagen, Dentalinstrumente mit einer Innenkühlung zu versehen. Ein derartiges Instrument zeigt beispielsweise die DE 23 31 023 C1. Das Instrument weist eine zu seiner Längsachse zentrische Bohrung auf, durch welche Kühlmittel zum Bereich der Spitze des Instruments geleitet werden können. Derartige Instrumente arbeiten nur dann zufriedenstellend, wenn der Durchmesser, insbesondere des Werkzeugteils, ausreichend groß ist, um die Einbringung einer Kühlbohrung zu ermöglichen. Für kleinere Werkzeugdurchmesser, wie sie bei kleineren Implantaten benötigt wird, ergibt sich durch die Kühlausnehmungen eine Verringerung der Stabilität und Belastbarkeit des Dentalinstruments, so daß die Gefahr von Brüchen oder Deformierungen besteht. Aus diesem Grunde sind die aus dem Stand der Technik bekannten Dentalinstrumente für kleinere Durchmesserbereiche nicht anwendbar.

Bei Dentalinstrumenten mit geringem Durchmesser wurde deshalb versucht, das Kühlmittel von außen zuzuführen. Dies ist jedoch nur in beschränktem Maße möglich, da derartige Dentalinstrumente mit einem ringwulstartigen Anschlag versehen sind, welcher für eine exakte Dimensionierung, insbesondere der Tiefe, der Knochenkavität dient. Je weiter somit das Instrument in den Knochen eindringt, desto schwieriger ist es, von außen Kühlflüssigkeit zuzuführen.

Der Erfindung liegt die Aufgabe zugrunde, ein Dentalinstrument der eingangs genannten Art zu schaffen, welches bei einfachem Aufbau, einfacher, kostengünstiger Herstellbarkeit und sicherer Anwendbarkeit auch bei kleinen Durchmessern eine ausreichende Kühlmittelzufuhr gewährleistet.

Erfindungsgemäß wird die Aufgabe dadurch gelöst, daß der Anschlag mit zumindest einer nutartigen, sich über seine axiale Länge erstreckenden Ausnehmung versehen ist.

Das erfindungsgemäße Dentalinstrument zeichnet sich durch eine Reihe erheblicher Vorteile aus. Da der Anschlag lediglich mit zumindest einer Ausnehmung versehen ist, kann er seine Anschlag-Funktion in ausreichender Weise erfüllen, ohne daß die Gefahr besteht, daß der behandelnde Zahnarzt das Instrument zu tief in den Knochen absenkt. Durch die Ausnehmung ist weiterhin sichergestellt, daß eine ausreichende Menge an Kühlflüssigkeit in den Zerspanungsbereich geleitet werden kann. Da keine innenliegenden Kühlbohrungen oder Kühlkanäle vorgesehen sind, besteht auch nicht die Gefahr von Verunreinigungen, welche zum einen aus hygienischen Gründen und zum anderen aus Gründen der Betriebssicherheit unerwünscht sind. Ein weiterer Vorteil der Ausnehmung liegt darin, daß diese zugleich auch die Abführung von Spänen und Knochen-Material sicherstellt. Da sich die Ausnehmung zusammen mit der Ringwulst und dem Dentalinstrument dreht, ist die Zufuhr von Kühlflüssigkeit über den gesamten Umfangsbereich der Kavität sichergestellt. Gleiches gilt für die Möglichkeit, Späne abzuführen.

In einer günstigen Weiterbildung der Erfindung ist vorgesehen, daß der Anschlag mehrere Ausnehmungen umfaßt. Diese können bevorzugterweise gleichmäßig am Umfang des Anschlags verteilt sein, es sind jedoch auch asymmetrische Anordnungen möglich, die beispielsweise das Entstehen von Rattermarken sowie einen gleichmäßigen Lauf des Instruments unterstützen können. Durch eine entsprechende Ausgestaltung und Verteilung der Ausnehmungen kann auch eine gezielte Auswuchtung des Dentalinstruments erfolgen.

Die Ausnehmung kann erfindungsgemäß in unterschiedlichster Weise ausgebildet sein. So ist es beispielsweise günstig, wenn sich diese in Richtung der Längsachse des Dentalinstruments erstreckt. Ein axial gerichteter Kühlmittelfluß kann somit besonders einfach und sicher durchgeführt werden. In einer abgewandelten Ausgestaltungsform kann vorgesehen sein, daß die Ausnehmung zur Richtung der Längsachse des Dentalinstruments geneigt verläuft. Diese Neigung kann, von oben gesehen, zur Drehrichtung hin oder von der Drehrichtung weg angeordnet sein, um auf diese Weise einen zusätzlichen Pumpeffekt zum Zuführen oder zum Abführen der Kühlflüssigkeit zu erzielen. Die Ausnehmung kann in einer weiteren Variante auch gewendelt ausgestaltet sein, um so die Kühlflüssigkeit begünstigt in das Bohrloch zu transportieren.

Besonders günstig ist es, wenn die Ausnehmung mit einer Längsausnehmung oder Spannut des Werkzeugteils fluchtet. Das durchgeleitete Kühlmittel kann somit strömungstechnisch günstiger in den vorderen Bereich des Werkzeugs geleitet werden. Gleiches gilt für die Abfuhr von Spänen durch das rückströmende Kühlmedium. Besonders vorteilhaft kann es erfindungsgemäß weiterhin sein, wenn die Ausnehmung mit einem Querschnitt versehen ist, welcher im wesentlichen gleich ist zu dem Querschnitt der Längsausnehmung oder Spannut des Werkzeugteils. So kann die Form der Wandung der Ausnehmung, analog zur Form der Wandung der Längsausnehmung oder Spannut des Werkzeugteils bogenförmig, teilelipsoid oder in anderer Weise gekrümmt bzw. mit geradlinigen Flächen in einem rechten oder stumpfen Winkel ausgestaltet sein.

Um die Anschlagfunktion zu unterstützen, kann es weiterhin günstig sein, wenn der Anschlag an den Bereichen zwischen der oder den Ausnehmungen mit zumindest einer sich in einer radialen Ebene erstreckenden Anschlagfläche versehen ist. Diese kann - in Drehrichtung des Instruments - mit einer Anlauffläche oder Anphasung ausgebildet sein, um zu verhindern, daß der Übergang zu der Ausnehmung des Anschlags selbst als Schneide wirkt und unerwünschte Bearbeitungsvorgänge oder Verletzungen des Patienten hervorruft.

Der Werkzeugteil des Dentalinstruments kann in den unterschiedlichsten Formen ausgeführt sein, beispielsweise als Bohrer oder Fräser. Weiterhin ist es möglich, das erfindungsgemäße Dentalinstrument aus unterschiedlichsten Materialien herzustellen, beispielsweise aus nicht rostenden Stählen, aus Werkzeugstählen, aus Hartmetall oder Titan bzw. den entsprechenden Legierungen. Da das Dentalinstrument nicht, wie beim Stand der Technik bekannt, durch zentrische Kühlkanäle oder ähnliches in seinem Querschnitt geschwächt ist, weist es eine hohe Festigkeit bzw. Stabilität auf. Dies erlaubt auch die Verwendung von Materialien, welche aus Festigkeitsgründen bei den aus dem Stand der Technik bekannten Instrumenten nicht zur Anwendung gelangen konnten.

Im folgenden wird die Erfindung anhand von Ausführungsbeispielen in Verbindung mit der Zeichnung beschrieben. Dabei zeigt:
- Fig. 1: eine perspektivische Ansicht eines ersten Ausführungsbeispiels eines erfindungsgemäßen Dentalinstruments,
- Fig. 2: eine perspektivische Ansicht eines zweiten Ausführungsbeispiels des erfindungsgemäßen Dentalinstruments, und
- Fig. 3 bis 8: Schnittansichten unterschiedlicher Ausgestaltungsformen des Querschnitts des Anschlags des erfindungsgemäßen Dentalinstruments.

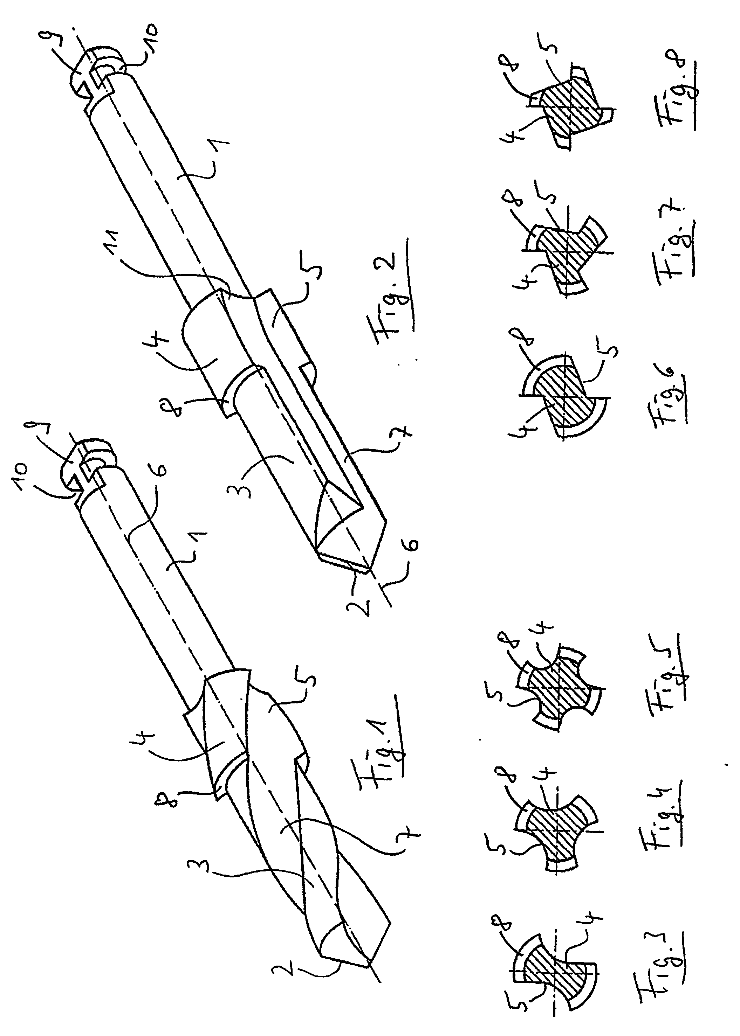

Die Fig. 1 zeigt ein erstes Ausführungsbeispiel eines erfindungsgemäßen Dentalinstruments. Dieses umfaßt einen zylindrischen Schaft 1, welcher um eine Längsachse 6 drehbar in einen Antriebs-Apparat einsetzbar ist. Zur drehfesten Verbindung dient eine Mitnehmerfläche 9, die Sicherung des Dentalinstruments erfolgt über eine Verriegelungs-Ringnut 10.

Im mittleren Bereich weist das Dentalinstrument einen Anschlag 4 auf, welcher ringwulstartig ausgebildet ist und mit zwei Anschlagflächen 8 versehen ist. An den Anschlag 4 schließt sich ein Werkzeugteil 3 an, welcher Schneiden 2 aufweist. Der Werkzeugteil ist bei dem gezeigten Ausführungsbeispiel in Form eines Bohrers ausgebildet.

Wie die Fig. 1 zeigt, ist erfindungsgemäß der Anschlag 4 mit zwei Ausnehmungen 5 versehen, welche zur Längsachse 6 gewendelt angeordnet sind und zu zwei Spannuten 7 des Werkzeugteils 3 fluchten. Die Ausnehmungen 5 haben eine Querschnittsform, welche der Querschnittsform der jeweiligen Spannut 7 entspricht.i

Mögliche Formen der Ausnehmungen 5 sind beispielshaft in den Fig. 3 bis 5 dargestellt.

Der Anschlag 4 weist eine radiale Anschlagfläche 8 auf, welche beim Einbringen des Dentalinstruments in ein Knochen-Material die Bearbeitungstiefe begrenzt.

Die Fig. 3 bis 5 zeigen Ausgestaltungs-Varianten von Querschnitten des Anschlags 4 mit zugehörigen Ausnehmungen 5. In Fig. 3 ist ersichtlich, daß, ähnlich wie in Fig. 1, zwei Ausnehmungen 5 vorgesehen sind, welche eine bogenförmige oder teil-elipsiode Gestalt haben können. Durch die in Fig. 1 gezeigte gewendelte, schräggestellte Form der Ausnehmungen 5 ist gewährleistet, daß das Kühlmittel strömungstechnisch günstig durch die Spannuten 7 dem Bereich der Schneiden 2 zugeführt wird.

Die Fig. 4 und 5 zeigen alternative Ausgestaltungsvarianten, bei welchen der Anschlag 4 mit drei oder vier Ausnehmungen 5 versehen ist. Diese sind am Umfang gleich verteilt und weisen beispielsweise einen teilkreisbogenförmigen Querschnitts-Randbereich auf.

Die Fig. 3 bis 5 zeigen jeweils die zugehörigen Anschlagflächen 8 des Anschlags 4. Es versteht sich, daß die Schnittebene an der nach vorne weisenden Begrenzungsebene des Anschlags 4 (gemäß Fig. 1) angeordnet ist, wobei die Blickrichtung der Fig. 3 bis 5 in Richtung auf den Schaft 1 gerichtet ist.

Die Fig. 2 und 6 bis 8 zeigen weitere Ausgestaltungsbeispiele, analog den Fig. 1 und 3 bis 5. gleiche Teile sind jeweils mit gleichen Bezugsziffern versehen.

Bei dem Ausführungsbeispiel gemäß Fig. 2 sind zwei Spannuten 7 vorgesehen, welche sich geradlinig parallel zur Längsachse 6 erstrecken. Fluchtend zu den beiden Spannuten 7 sind zwei Ausnehmungen 5 in den Anschlag 4 eingebracht. Die Ausnehmungen 5 fluchten zu den Spannuten 7 und entsprechen ihrer Querschnittsform. Am rückseitigen Bereich der Ausnehmungen 5 ist jeweils eine Abschrägung 11 vorgesehen, welche den Kühlmitteleinlauf bzw. die Abfuhr von Spänen unterstützt. Auch bei diesem Ausführungsbeispiel sind die Anschlagflächen 8 in einer zur Drehachse 6 rechtwinkligen Ebene angeordnet.

Die Fig. 6 bis 8 zeigen weitere Abwandlungen und Ausgestaltungsformen der Ausnehmungen 5 des Anschlags 4. Die Schnittebenen-Anordnungen sowie die Blickrichtung entsprechen den Fig. 3 bis 5.

Aus Fig. 6 ist ersichtlich, daß zwei Ausnehmungen 5 vorgesehen sind, welche jeweils geradlinige Flanken haben, welche in einem stumpfen Winkel zueinander ausgerichtet sind. Bei dem Ausführungsbeispiel gemäß Fig. 7 sind drei Ausnehmungen 5 vorgesehen, während bei dem Ausführungsbeispiel gemäß Fig. 8 vier Ausnehmungen 5 angeordnet sind. Die Ausnehmungen 5 sind jeweils gleichmäßig um den Umfang des Anschlags verteilt, um zum einen eine gleichmäßige Kühlmittel-Zufuhr zu gewährleisten und einen Gleichlauf des Instruments sicherzustellen.

Die Erfindung ist nicht auf die beschriebenen Ausführungsbeispiele beschränkt, vielmehr ergeben sich im Rahmen der Erfindung vielfältige Abwandlungs- und Modifikationsmöglichkeiten. So ist es beispielsweise möglich, eine weitaus größere Anzahl an Ausnehmungen in dem Anschlag auszuarbeiten, so daß dieser beispielsweise einen zahnradartigen Querschnitt haben kann. Auch die radiale Tiefe der Ausnehmungen kann unterschiedlich gewählt werden, beispielsweise nur bis zu einem Durchmesserbereich, der dem Außendurchmesser des Werkzeugteils entspricht oder mit einer radial größeren Tiefe. Es ist auch möglich, die Ausnehmungen über ihre axiale Länge mit unterschiedlicher Tiefe oder unterschiedlichem Querschnitt versehen.

Zusammenfassend ist folgendes festzustellen:

Die Erfindung bezieht sich auf ein Dentalinstrument mit einem um seine Längsachse 6 drehbaren Schaft 1, welcher lösbar mit einer Antriebseinrichtung verbindbar ist, sowie mit einem mit dem Schaft 1 verbundenen, mit zumindest einer Schneide 2 versehenen Werkzeugteil 3 und mit einem zwischen dem Schaft 1 und dem Werkzeugteil 3 angeordnet, im wesentlichen ringwulstartigen Anschlag 4, dadurch gekennzeichnet, daß der Anschlag 4 mit zumindest einer nutartigen, sich über seine axiale Länge erstreckenden Ausnehmung 5 versehen ist.

## Patentansprüche

1. Dentalinstrument mit einem um seine Längsachse (6) drehbaren Schaft (1), welcher lösbar mit einer Antriebseinrichtung verbindbar ist, sowie mit einem mit dem Schaft (1) verbundenen, mit zumindest einer Schneide (2) versehenen Werkzeugteil (3) und mit einem zwischen dem Schaft (1) und dem Werkzeugteil (3) angeordnet, im wesentlichen ringwulstartigen Anschlag (4), **dadurch gekennzeichnet, daß** der Anschlag (4) mit zumindest einer nutartigen, sich über seine axiale Länge erstreckenden Ausnehmung (5) versehen ist.

2. Dentalinstrument nach Anspruch (1), **dadurch gekennzeichnet, daß** der Anschlag (4) mehrere Ausnehmungen (5) umfaßt.

3. Dentalinstrument nach Anspruch 1 oder 2, **dadurch gekennzeichnet, daß** die Ausnehmung (5) sich in Richtung der Längsachse (6) des Dentalinstruments erstreckt.

4. Dentalinstrument nach Anspruch 1 oder 2, **dadurch gekennzeichnet, daß** die Ausnehmung (5) zur Richtung der Längsachse (6) des Dentalinstruments geneigt verläuft.

5. Dentalinstrument nach einem der Ansprüche 1 oder 2, **dadurch gekennzeichnet, daß** die Ausnehmung (5) gewendelt ausgebildet ist.

6. Dentalinstrument nach einem der Ansprüche 1 bis 5, **dadurch gekennzeichnet, daß** die Ausnehmung (5) mit einer Längsausnehmung oder Spannut (7) des Werkzeugteils (3) fluchtet.

7. Dentalinstrument nach einem der Ansprüche 1 bis 6, **dadurch gekennzeichnet, daß** der Anschlag (4) an den Bereich zwischen der oder den Ausnehmungen (5) mit zumindest einer sich in einer radialen Ebene erstreckenden Anschlagfläche (8) versehen ist.

8. Dentalinstrument nach einem der Ansprüche 2 bis 7, **dadurch gekennzeichnet, daß** die mehreren Ausnehmungen (5) gleichmäßig am Umfang verteilt angeordnet sind.

9. Dentalinstrument nach einem der Ansprüche 1 bis 8, **dadurch gekennzeichnet, daß** die Ausnehmung (5) mit einem Querschnitt versehen ist, welcher im wesentlichen gleich ist zu der Längsausnehmung oder Spannut (7) des Werkzeugteils (3).

10. Dentalinstrument nach einem der Ansprüche 1 bis 9, **dadurch gekennzeichnet, daß** der Werkzeugteil (3) in Form eines Bohrers ausgebildet ist.

11. Dentalinstrument nach einem der Ansprüche 1 bis 9, **dadurch gekennzeichnet, daß** der Werkzeugteil (3) in Form eines Fräsers ausgebildet ist.

12. Dentalinstrument nach einem der Ansprüche 1 bis 9, **dadurch gekennzeichnet, daß** der Werkzeugteil (3) in Form eines Schleifers ausgebildet ist.

## Claims

1. A dental instrument having a shank (1) rotatable around its longitudinal axis (6), which can be detachably connected to a drive mechanism, and also having a tool part (3) connected to the shank (1) and provided with at least one blade (2), and having a substantially toroidal stop (4) disposed between the shank (1) and the tool part (3),
**characterised in that** the stop (4) is provided with at least one groove-type recess (5) extending over its axial length.

2. A dental instrument according to Claim (1),
**characterised in that** the stop (4) comprises several recesses (5).

3. A dental instrument according to Claim 1 or 2,
**characterised in that** the recess (5) extends in the direction of the longitudinal axis (6) of the dental instrument.

4. A dental instrument according to Claim 1 or 2,
**characterised in that** the recess (5) runs inclined to the direction of the longitudinal axis (6) of the dental instrument.

5. A dental instrument according to one of Claims 1 or 2,
**characterised in that** the recess (5) has a coiled construction.

6. A dental instrument according to one of Claims 1 to 5,
**characterised in that** the recess (5) aligns with a longitudinal recess or clamping groove (7) of the tool part (3).

7. A dental instrument according to one of Claims 1 to 6,
**characterised in that** the stop (4) is provided with at least one stop face (8) extending in a radial plane at the region between the recess or recesses (5).

8. A dental instrument according to one of Claims 2 to 7,
**characterised in that** the several recesses (5) are arranged distributed uniformly over the periphery.

9. A dental instrument according to one of Claims 1 to 8,
**characterised in that** the recess (5) is provided with a cross section which is substantially equal to the longitudinal recess or clamping groove (7) the tool part (3).

10. A dental instrument according to one of Claims 1 to 9,
**characterised in that** the tool part is constructed in the form of a drill.

11. A dental instrument according to one of Claims 1 to 9,
**characterised in that** the tool part (3) is constructed in the form of a cutter.

12. A dental instrument according to one of Claims 1 to 9,
**characterised in that** the tool part (3) is constructed in the form of a grinder.

## Revendications

1. Instrument dentaire comprenant une tige (1) susceptible de tourner autour de son axe longitudinal (6), susceptible d'être reliée de façon démontable à un dispositif d'entraînement, et comprenant une partie formant outil (3), reliée à la tige (1), présentant au moins un tranchant (2), et comprenant une butée (4) sensiblement du type bourrelet annulaire, placée entre la tige (1) et la partie formant outil (3), **caractérisé en ce que** la butée (4) est pourvue d'au moins un évidement (5) du type rainure s'étendant sur sa longueur axiale.

2. Instrument dentaire selon la revendication 1, **caractérisé en ce que** la butée (4) comprend plusieurs évidements (5).

3. Instrument dentaire selon la revendication 1 ou 2, **caractérisé en ce que** l'évidement (5) s'étend dans la direction de l'axe longitudinal (6) de l'instrument dentaire.

4. Instrument dentaire selon la revendication 1 ou 2, **caractérisé en ce que** l'évidement (5) s'étend de façon inclinée par rapport à la direction de l'axe longitudinal (6) de l'instrument dentaire.

5. Instrument dentaire selon l'une des revendications 1 ou 2, **caractérisé en ce que** l'évidement (5) est conformé en spirale.

6. Instrument dentaire selon l'une des revendications 1 à 5, **caractérisé en ce que** l'évidement (5) est aligné avec un évidement longitudinal ou rainure de serrage (7) de la partie formant outil (3).

7. Instrument dentaire selon l'une des revendications 1 à 6, **caractérisé en ce que** la butée (4), au niveau de la zone située entre la ou les évidement(s) (5) est pourvue d'au moins une surface de butée (8) s'étendant dans un plan radial.

8. Instrument dentaire selon l'une des revendications 2 à 7, **caractérisé en ce que** les différents évidements (5) sont répartis régulièrement sur le pourtour.

9. Instrument dentaire selon l'une des revendications 1 à 8, **caractérisé en ce que** l'évidement (5) présente une section transversale qui est sensiblement égale à celle de l'évidement longitudinal ou de la rainure de serrage (7) de la partie formant outil (3).

10. Instrument dentaire selon l'une des revendications 1 à 9, **caractérisé en ce que** la partie formant outil (3) présente la forme d'un foret.

11. Instrument dentaire selon l'une des revendications 1 à 9, **caractérisé en ce que** la partie formant outil (3) présente la forme d'une fraise.

12. Instrument dentaire selon l'une des revendications 1 à 9, **caractérisé en ce que** la partie formant outil (3) présente la forme d'une meule.
